# EUROPEAN PATENT APPLICATION

(11) **EP 4 484 380 A1**
(43) Date of publication of application: **01.01.2025**
(21) Application number: 24175989.3
(22) Date of filing: 15.05.2024
(51) Int. Cl.: C02F 1/00, C25B 1/04, C25B 15/08, C02F 1/28, C02F 1/461, C02F 103/04

(54) **APPARATUS AND PROCESS TO CONTROL PROVIDING PURIFIED WATER FOR HYDROGEN PRODUCTION**

(30) Priority: 18.05.2023 US 202318198868
(71) Applicant: Air Products and Chemicals, Inc., Allentown, PA 18106 (US)
(72) Inventor: WILSON, Graeme Richard, Surrey (GB); CONWAY, Timothy Edward, Allentown, 18103 (US); AKHURST, Matthew William, 3055NA Rotterdam (NL); LESLIE, Fiona Victoria, 018980 Singapore (SG)
(74) Representative: Beck Greener LLP

(57) **Abstract**

An apparatus to provide purified water to one or more electrolyzers for manufacture of hydrogen can include a polisher positioned to receive at least a minimum flow of water from a demineralization unit to purify the water and output the purified water to at least one electrolyzer of an electrolyzer house. The flow of water can be adjusted to maintain a minimum flow of water passing through one or more beds of the polisher while accounting for the demand of water at the electrolyzers. Flow adjustments can be made between providing all the purified water to the electrolyzers during high demand operations to other configurations in which little or no purified water is fed to the electrolyzers and, instead, that water is recycled back to the water demineralization unit.

## Description

The present innovation relates to providing purified water for use as a feed to electrolyzers of one or more electrolyzer houses for hydrogen production. Some embodiments can be utilized in conjunction with green hydrogen and green ammonia production that may utilize renewable power sources for production of hydrogen and ammonia.

Green ammonia manufacturing can be provided so that ammonia is made by use of electricity from renewable power sources (*e.g.,* solar power, wind power). Examples of ammonia production that can be provided from renewable power sources can be appreciated from EP3957772A1, for example.

Hydrogen production can be provided by use of one or more electrolyzers. The electrolyzers can produce hydrogen from water *via* electrolysis. An example of a system for production of hydrogen can be appreciated from US2022/0290309. Hydrogen production from water that relies on renewable power sources to power operation of various production units can be considered green hydrogen manufacturing.

The Inventors determined that a new process and apparatus for controlling how purified water can be provided to facilitate improvements over conventional systems that often utilize continual recycling of water to account for operational demands of purified water electrolyzers may have. For example, embodiments can be configured for providing purified water to electrolyzers used for hydrogen production can be improved to provide greater operational flexibility, better adaptability to changing demand of purified water that can fluctuate greatly due to renewable energy availability, and reduced pumping and water demineralization processing duties. Embodiments can be configured to utilize a water flow control scheme that can permit greater accuracy of determining electrolyzer demand for water and more accurate adjustment to flow demand for wide operational fluctuations that may occur (*e.g.,* demand for water varying due to electrolyzer(s) adjusting operation from 0% capacity to 100% capacity due to renewable energy availability, *etc.*)*.*

Some embodiments can be adapted so that a polisher for purifying demineralized water to a pre-selected electrolyzer feed purification level can be output to accommodate electrolyzer demand while also maintaining a pre-defined minimum flow of water through the polisher to maintain polisher bed functionality and avoid polisher bed degradation (*e.g.,* from agglomeration of the bed material, channeling that can be formed in the bed material, *etc.).* Embodiments can be adapted so purified water output from the polisher can be fed entirely to one or more electrolyzers of an electrolyzer house when demand is at a first pre-defined level. Embodiments can also be adapted so that the purified water output from the polisher can be split so a first portion is fed to the electrolyzers of the electrolyzer house and a second portion bypasses the electrolyzer house and is recycled back to the water demineralization unit in response to detecting that the one or more electrolyzers of the electrolyzer house has a demand for water that is at a second pre-defined level that is lower than the first pre-defined level. Embodiments can also be adapted so that the purified water output from the polisher can be split so a first portion is fed to the electrolyzer house to bypass the electrolyzers for being recycled back to the water demineralization unit while also maintaining a pressure head for the feeding of water to the electrolyzers and a second portion bypasses the electrolyzer house and is recycled back to the water demineralization unit in response to detecting that the one or more electrolyzers of the electrolyzer house has a demand for water that is at a third pre-defined level that is lower than the second pre-defined level and is also lower than the first pre-defined level. In some situations, a significant majority of the purified water can simply bypass the electrolyzer house while there may also be a small portion passed through the electrolyzer house while bypassing electrolyzers to maintain a pressure head for the electrolyzer house in which this small portion can also be recycled back to the water demineralization unit after it is passed through the conduits of the electrolyzer house feed conduit for maintaining the pressure head for the electrolyzer house.

Embodiments can be adapted to include a purified water control system that can monitor electrolyzer demand and adjust water flow to the polisher and/or to the electrolyzer house accordingly to account for the demand for water being within one of the different pre-selected demand levels. In some embodiments, the flow of water can be controlled so that the water fed to the polisher for purification is always at least fed at a pre-selected minimum velocity and also does not exceed a pre-selected maximum velocity. A pre-selected minimum velocity can be, for example, 0.6 meters per second (m/s) or other suitable minimum velocity value and the pre-selected maximum velocity can be, for example, 3.5 m/s, a value that is less than 4 m/s, a value that is between 3.4 m/s and 4 m/s (*e.g.,* in a range from 3.4 m/s to 4 m/s), or other suitable maximum velocity setting.

In some configurations, the polisher can be positioned so it is substantially close to the electrolyzer house and remote from the demineralization unit. For example, embodiments can be configured so that of the overall conduit piping distance for feeding water from the demineralization unit to the electrolyzer house, at least 60%, at least 70% or between 70% and 80% (*e.g.* in a range from 70% to 80%) of the overall piping distance is between the polisher and the water demineralization unit and the remaining 40% to 20% of the piping is between the polisher and the electrolyzers of the electrolyzer house. The piping can be provided so that there is 4 times more piping distance between the polisher and the water demineralization unit as compared to the piping distance between the polisher and the electrolyzer house. In other embodiments, the piping can be provided so that there is a ratio of between 4:1 and 3:2 (*e.g.,* in a range from 4:1 to 3:2) of piping distance between the polisher and the water demineralization unit as compared to the piping distance between the polisher and the electrolyzer house. As a non-limiting example, 800 meters of piping can be between the polisher and the water demineralization unit to feed water from the demineralization unit to the polisher and 200 meters of piping can be between the polisher and the electrolyzer house for providing purified water from the polisher to the electrolyzer house to provide a ratio of 4:1 of piping distance between the polisher and the water demineralization unit as compared to the piping distance between the polisher and the electrolyzer house.

In a first aspect, an apparatus to control providing of purified water for hydrogen production is provided. The apparatus can include a polisher positioned to purify a feed of water from a water demineralization unit for outputting a purified feed of water having a pre-selected level of purity for feeding to electrolyzers of an electrolyzer house for generation of hydrogen *via* electrolysis. The polisher can be positioned and arranged such that a first portion of the purified feed of water outputtable from the polisher is feedable to the electrolyzers and a second portion of the purified feed of water is outputtable to an electrolyzer house bypass conduit to bypass the electrolyzer house conduit and feed the second portion of the purified water to the water demineralization unit. A water purification control system can be configured to determine a demand for purified water at the electrolyzers and adjust a proportion of the purified feed of water output from the polisher that is included in the first portion of the purified feed of water and adjust a proportion of the purified feed of water output from the polisher that is included in the second portion of the purified feed of water so that a flow of water passed through the polisher is at or above a pre-selected minimum flow and the flow of water passed through the polisher is at or below a pre-selected maximum flow while also feeding sufficient purified water to the electrolyzers to meet the determined demand for the purified water.

In a second aspect, the apparatus an include an electrolyzer house feed conduit connected between the electrolyzers and the polisher to receive the first portion of the purified feed of water and an electrolyzer house bypass conduit connected between the water demineralization unit and the polisher to receive the second portion of the purified feed of water to bypass the electrolyzer house conduit and feed the second portion to the water demineralization unit. Each of these conduits can include at least one adjustable valve that can be communicatively connected to the water purification control system so positions of the valves can be adjusted *via* the control system.

For example, there can be an adjustable valve connected to the electrolyzer house bypass conduit. There can also be at least one adjustable valve connected to the electrolyzer house feed conduit.

In a third aspect, the apparatus can include a recycle conduit connected to the electrolyzer house feed conduit so that a pressure head maintenance bypass portion of the first portion of the purified feed is passable to the water demineralization unit after bypassing the electrolyzers to maintain a pressure head for the electrolyzers. An adjustable valve can be connected to the recycle conduit. The adjustable valve can be communicatively connected to the water purification control system so a position of the valve can be adjusted *via* the control system.

In a fourth aspect, the water purification control system can include a controller, an electrolyzer house feed conduit sensor positioned to detect a flow rate or velocity of purified water fed to the electrolyzer house that is communicatively connectable to the controller, an electrolyzer house bypass conduit sensor positioned to detect a flow rate or velocity of purified water passed through the electrolyzer house bypass conduit, and a polisher feed conduit sensor positioned to detect a flow rate or velocity of water fed to the polisher for purification. The controller can include hardware that includes at least one processor connected to a non-transitory memory and at least one transceiver unit.

In a fifth aspect, the pre-selected minimum flow can be a velocity of 0.6 m/s or other suitable velocity or a value that corresponds to such a velocity. Also, the pre-selected maximum flow can be a velocity that is no greater than 4 m/s. For example, the pre-selected maximum flow can be a velocity in a range of between 3.5 m/s and 4 m/s (*e.g.,* in a range from 3.5 m/s to 4 m/s). Other suitable maximum flow velocities can alternatively be selected in other embodiments.

In a sixth aspect, the apparatus can include other elements. For example, the apparatus can include the electrolyzer house. The apparatus can also include the electrolyzers of the electrolyzer house.

In a seventh aspect, the polisher can be positioned such that piping for feeding the water from the water demineralization unit to the electrolyzer house is arranged so that there is a ratio of between 4:1 and 3:2 (*e.g.,* in a range from 4:1 to 3:2) of a piping distance between the polisher and the water demineralization unit as compared to a piping distance between the polisher and the electrolyzer house.

In an eighth aspect, the apparatus of the first aspect can include one or more features of the second aspect, third aspect, fourth aspect, fifth aspect, sixth aspect and/or seventh aspect. It should be appreciated that other embodiments can utilize other aspects as discussed in the exemplary embodiments of the apparatus discussed herein as well. Embodiments of the apparatus can be configured to implement an embodiment of our process to control providing of purified water for hydrogen production.

In a ninth aspect, a process to control providing of purified water for hydrogen production is provided. The process can include feeding water to a polisher for purification of the water to form purified water for feeding to electrolyzers of an electrolyzer house for formation of hydrogen from the purified water *via* electrolysis and determining electrolyzer demand for the purified water so that: (i) in response to detection of a first pre-selected level of electrolyzer demand for the purified water, feeding an entirety of the purified water output from the polisher to the electrolyzer house for feeding to the electrolyzers; (ii) in response to detection of a second pre-selected level of electrolyzer demand for the purified water, feeding a first portion of the purified water output from the polisher to the electrolyzer house for feeding to the electrolyzers and feeding a second portion of the purified water output from the polisher to an electrolyzer house bypass conduit to feed the purified water to a water demineralization unit; and (iii) in response to detection of a third pre-selected level of electrolyzer demand for the purified water, passing the purified water output from the polisher to the water demineralization unit such that the purified water bypasses the electrolyzers.

In some embodiments, the passing of the purified water output from the polisher to the water demineralization unit such that the purified water bypasses the electrolyzers can include (a) passing a first portion of the purified water output from the polisher to an electrolyzer house feed conduit for maintaining a pressure head for feeding water to the electrolyzers and being recycled back to the water demineralization unit and (b) passing a second portion of the purified water output from the polisher to an electrolyzer house bypass conduit to feed the second portion of the purified water to the water demineralization unit.

In other embodiments, the passing of the purified water output from the polisher to the water demineralization unit such that the purified water bypasses the electrolyzers can include passing a portion of the purified water output from the polisher to an electrolyzer house bypass conduit to feed the portion of the purified water to the water demineralization unit.

In a tenth aspect, the process of the ninth aspect can include other steps. For example, the process can include forming hydrogen from the purified water fed to the electrolyzers *via* electrolysis. As another example, the process can also (or alternatively) include adjusting a flow of water being fed to the polisher in response to the determined electrolyzer demand for the purified water.

In an eleventh aspect, the determining of the electrolyzer demand for the purified water can be based on one or more of: (i) loading feedback from the electrolyzers, (ii) a flow rate or velocity of purified water detected by a sensor of the electrolyzer house bypass conduit, (iii) a flow rate or velocity of water being fed to the polisher detected by a polisher feed sensor, (iv) a flow rate or velocity of water being passed through a recycle conduit detected by a recycle conduit sensor, and (v) a flow rate or velocity of water being passed through an electrolyzer house feed conduit for feeding to the electrolyzers detected by an electrolyzer house feed conduit sensor. In some embodiments, all of conditions (i) through (v) can be utilized. Other embodiments may only utilize a single condition of conditions (i) through (v). Yet other embodiments can utilize a combination of two or more of these conditions, three of these conditions, or four of these conditions.

In a twelfth aspect, the process of the ninth aspect can include any or all of the features of the tenth aspect and/or eleventh aspect. Yet additional embodiments can also include other features or process steps. Embodiments of our apparatus or water purification control system can be utilized to implement an embodiment of our process.

In a thirteenth aspect, a water purification control system is provided. Embodiments of the water purification control system can be configured to implement an embodiment of our process for controlling the providing of purified water. The control system can include a controller having a processor connected to a non-transitory computer readable medium. The controller can be configured to determine a demand for purified water at electrolyzers of an electrolyzer house and adjust a proportion of purified water output from a polisher that is included in a first portion of the purified water fed to the electrolyzers and adjust a proportion of the purified water output from the polisher that is included in a second portion of the purified water to bypass the electrolyzers so that a flow of water passed through the polisher to purify the water is at or above a pre-selected minimum flow and the flow of water passed through the polisher is at or below a pre-selected maximum flow.

In a fourteenth aspect, the water purification control system can also include a plurality of sensors communicatively connected to the controller. The sensors can include one or more of: (i) an electrolyzer house bypass conduit sensor positioned to detect a flow rate or velocity of purified water passed through an electrolyzer house bypass conduit, (ii) a polisher feed sensor positioned to detect a flow rate or velocity of water being fed to the polisher, (iii) a recycle conduit sensor positioned to detect a flow rate or velocity of water being passed through a recycle conduit, and/or (iv) an electrolyzer house feed conduit sensor positioned to detect a flow rate or velocity of water being passed through an electrolyzer house feed conduit for feeding to the electrolyzers. Some embodiments may utilize all of these sensors as well as additional sensors. Other embodiments may utilize only one, two, or three of these sensors.

In a fifteenth aspect, the control system of the thirteenth aspect can include any or all of the features of the fourteenth aspect as well as additional elements or features. Yet additional embodiments can also include features of our apparatus for example. Further, embodiments of the control system can be configured to utilize one or more features of our process (*e.g.,* a particular minimum or maximum flow value, *etc.*)*.*

It should be appreciated that embodiments of the process and apparatus can utilize various conduit arrangements and process control elements. For example, some embodiments can utilize an automated process control system and/or a distributed control system (DCS), for example. As another example, embodiments may utilize sensors (*e.g.,* pressure sensors, temperature sensors, flow rate sensors, concentration sensors, *etc.*)*,* controllers, valves, piping, and other process control elements. Various different conduit arrangements and process control systems can be utilized to meet a particular set of design criteria.

Other details, objects, and advantages of our process for providing purified water for hydrogen production, an apparatus for providing purified water for hydrogen production, a system for providing purified water for hydrogen production, and methods of making and using the same will become apparent as the following description of certain exemplary embodiments thereof proceeds.

Exemplary embodiments of our process to control the providing of purified water for hydrogen production, apparatus for controlling the providing of purified water for hydrogen production, system for controlling the providing of purified water for hydrogen production, and methods of making and using the same are shown in the drawings included herewith. It should be understood that like reference characters used in the drawings may identify like components.
Figure 1 is a schematic block diagram of a first exemplary embodiment of an apparatus 1 for controlling the providing of purified water for hydrogen production. The schematic diagram of Figure 1 also illustrates an exemplary process for providing purified water for hydrogen production.
Figure 2 is a block diagram of an exemplary embodiment of a controller 10 that can be utilized in the first exemplary embodiment of an apparatus 1 for controlling the providing of purified water for hydrogen production.
Figure 3 is a first exemplary process for controlling the providing of purified water for hydrogen production. The first exemplary embodiment of the water purification control system 11 shown in Figure 1 can be adapted to facilitate performance of this first exemplary process shown in Figure 3.

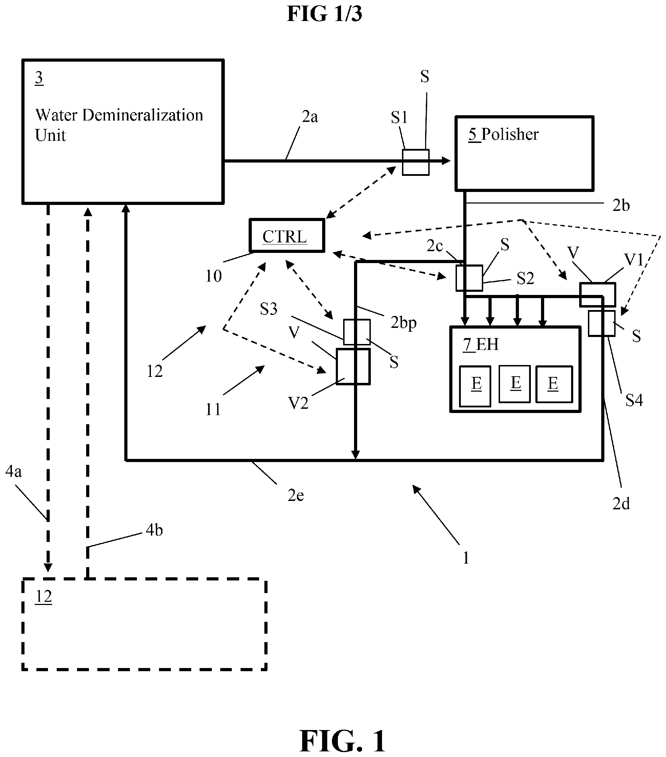

Referring to Figures 1-3, an apparatus 1 for controlling the providing of purified water for hydrogen production can include a water demineralization unit 3 that can demineralize and/or deionize water for providing a hydrogen production water feed stream 2a to an electrolyzer house assembly 12 that includes a polisher 5 for purifying the water for feeding to the electrolyzers E of an electrolyzer house 7. The hydrogen production water feed stream 2a can be passed through a polisher water feed conduit positioned between the polisher 5 and the water demineralization unit 3 to feed the hydrogen production water stream 2a to the polisher 5, for example.

In some configurations, the polisher 5 can be positioned so it is a pre-selected minimum distance from the electrolyzer house 7. Such a position can be selected so that the polisher 5 is substantially close to the electrolyzer house 7 and relatively remote from the water demineralization unit (*e.g.,* the polisher 5 is positioned closer to the electrolyzer house 7 as compared to the more remote water demineralization unit 3). For example, embodiments can be configured so that at least 60%, at least 70% or between 70% and 80% (*e.g.,* in a range from 70% to 80%) of the overall conduit piping distance for feeding water from the water demineralization unit 3 to the electrolyzer house 7 is between the polisher 5 and the water demineralization unit 4 and the remaining 40% to 20% of the piping distance is between the polisher 5 and the electrolyzers E of the electrolyzer house 7 for the supply of water to the electrolyzers E.

In some implementations of the apparatus 1, the piping for the conduit arrangement for feeding water from the water demineralization unit 3 to the electrolyzer house 7 can be provided so that there is 4 times more piping distance between the polisher 5 and the water demineralization unit 4 as compared to the piping distance between the polisher 5 and the electrolyzer house 7. In other implementations of the apparatus 1, the piping can be provided so that there is a ratio of between 4:1 and 3:2 (*e.g.,* in a range from 4:1 to 3:2) of piping distance between the polisher 5 and the water demineralization unit 3 as compared to the piping distance between the polisher 5 and the electrolyzer house 7. As a non-limiting example, 1,600 meters of piping can be between the polisher 5 and the water demineralization unit 3 to feed water from the demineralization unit 3 to the polisher 5 and 400 meters of piping can be between the polisher 5 and the electrolyzer house 7 for providing purified water from the polisher 5 to the electrolyzer house 7 to provide a ratio of 4:1 of piping distance between the polisher 5 and the water demineralization unit 3 as compared to the piping distance between the polisher 5 and the electrolyzer house 7. As another non-limiting example, 500 meters of piping can be between the polisher 5 and the water demineralization unit 3 to feed water from the demineralization unit 3 to the polisher 5 and 333.33 meters of piping can be between the polisher 5 and the electrolyzer house 7 for providing purified water from the polisher 5 to the electrolyzer house 7 to provide a ratio of 3:2 of piping distance between the polisher 5 and the water demineralization unit 3 as compared to the piping distance between the polisher 5 and the electrolyzer house 7.

A sensor S can be positioned to detect or monitor a flow rate of water fed to the polisher 5. The sensor can be considered a polisher feed sensor or a first sensor S1 that is positioned to detect the flow rate or water feed velocity of water fed to the polisher 5, for example. This sensor can be communicatively connected to a controller 10 (CTRL). The controller 10 can be configured to receive data from the sensor concerning the water feed rate or water feed velocity of water fed to the polisher 5 generated by the first sensor.

The polisher 5 can include one or more beds of water purification material for adsorbing impurities from the water to form a purified water stream 2b that is comprised of liquid water at a pre-selected purity content. The pre-selected purity content can be a within a pre-selected water purity content threshold that can be suitable for use as a feed to electrolyzers E for the formation of hydrogen *via* electrolysis. For example the purified water stream 2b output by the polisher 5 can be a stream of liquid water that is ultra-pure water (or may also be called ultrapure water). Ultra-pure water can also be considered a type 1 water that can reach a theoretical ideal level of purity with a resistivity of 18.2 Mega Ohms (MΩ).

The purified water stream 2b can fed to an electrolyzer house 7 (EH) that includes one or more electrolyzers E. The purified water stream 2b can be passed through a purified water stream output conduit positioned between the polisher 5 and the electrolyzer house 7 for feeding the purified water stream toward the electrolyzer house 7. The purified water can be passed from the purified water stream output conduit to an electrolyzer house feed conduit 2c for being fed to one or more electrolyzers E of the electrolyzer house 7. The portion of the purified water stream 2b output from the polisher that is fed to the electrolyzer house 7 can be considered a first portion of the purified water stream 2b. This first portion can be primarily routed to the electrolyzer house for feeding purified water to the electrolyzers E to meet purified water demand for electrolysis and hydrogen production performed *via* the electrolyzers.

A sensor S can be positioned to detect or monitor a flow rate of purified water fed to the electrolyzer house for being fed to the electrolyzers E. The sensor can be considered a sensor S of the electrolyzer house feed conduit 2c or a second sensor S2 that is positioned to detect the flow rate or water feed velocity of purified water fed to the electrolyzers E of the electrolyzer house 7, for example. This sensor S can be communicatively connected to a controller 10 (CTRL). The controller 10 can be configured to receive data from the sensor S of the electrolyzer house feed conduit 2c concerning the water feed rate or water feed velocity generated by the sensor.

Any portion of the purified water passed through the electrolyzer house feed conduit 2c without being routed to an electrolyzer E can include a pressure head maintenance bypass portion of the purified water stream 2b that can bypass the electrolyzers E of the electrolyzer house 7 to maintain a pressure head for feeding water to the electrolyzers E and be recycled back to the water demineralization unit 3 *via* a recycle conduit 2d positioned between the electrolyzer house 7 and the water demineralization unit 3 and also to maintain the flow rate or velocity of the water at a level that is at or above a pre-selected minimum velocity limit.

A control valve V can be connected between the electrolyzer house feed conduit 2c and the recycle conduit 2d. The control valve V of the recycle conduit 2d can be considered a first control valve V1 in some arrangements. The first control valve V1 can be adjusted between open and closed positions to facilitate the formation of the pressure head maintenance bypass portion of the purified water stream and recycling of this portion of the stream to the water demineralization unit 3 *via* the recycle conduit 2d. The control valve V of the recycle conduit 2d can have numerous different positions between its open position and closed position for adjusting a flow rate of the purified water passed through the recycle conduit 2d.

The control valve V of the recycle conduit 2d can be communicatively connected to the controller 10 so that the controller 10 can provide control signals for adjusting the control valve between its open and closed positions (*e.g.,* adjusting the valve from open to close positions or between any of its intermediate positions between being fully open or entirely closed). The controller 10 can communicate with this control valve to actuate adjustment of the valve to control the flow rate of purified water passing through the valve V and through the recycle conduit 2d.

An electrolyzer house bypass conduit 2bp can be connected to the purified water stream output conduit for receiving a second portion of the purified water stream 2b that can be split from this steam. For example, the splitting of this purified water stream 2b can occur after the purified water is output from the polisher 5, for example. As another example, it is contemplated that the splitting of the first and second portions of the purified water stream 2b formed by the polisher 5 can at the polisher 5 (*e.g.,* by utilization of multiple outlets of the polisher 5 or other splitting conduit arrangement positioned at the polisher 5).

A control valve V can be positioned in the electrolyzer house bypass conduit 2bp and/or can be connected between the electrolyzer house bypass conduit 2bp and the purified water stream output conduit connected to the polisher 5 for routing of the purified water stream 2b away from the polisher 5 (*e.g.,* to a unit downstream of the polisher 5 or for recycle to the demineralization unit 3, *etc.*)*.* This control valve V of the electrolyzer house bypass conduit 2bp can be considered a second control valve V2. This control valve can be adjusted between open and closed positions.

The controller 10 can be communicatively connected to the control valve V of the electrolyzer house bypass conduit 2bp to actuate adjustment of the position of this valve between its open and closed positions to adjust the flow rate of water being passed through the electrolyzer house bypass conduit 2bp. The control valve V of the electrolyzer house bypass conduit 2bp can have numerous different positions between its open and closed positions for adjusting and/or controlling the flow rate of the purified water passed through the electrolyzer house bypass conduit 2bp.

A sensor S can be positioned to detect or monitor a flow rate of purified water fed to the electrolyzer house bypass conduit 2bp for bypassing the electrolyzer house 7. The sensor can be considered a sensor S of the electrolyzer house bypass conduit 2bp or a third sensor S3 that is positioned to detect the flow rate or water feed velocity of purified water fed to the electrolyzer house bypass conduit 2bp, for example. This sensor S can be communicatively connected to a controller 10 (CTRL). The controller 10 can be configured to receive data from the sensor S of the electrolyzer house bypass conduit 2bp concerning the purified water feed rate or purified water feed velocity generated by the sensor.

A sensor S can be positioned to detect or monitor a flow rate of purified water fed to the recycle conduit 2d. The sensor can be considered a sensor S of the recycle conduit 2d or a fourth sensor S4 that is positioned to detect the flow rate or water feed velocity of purified water fed to the recycle conduit 2d, for example (*e.g.,* positioned to detect water velocity or flow rate at the recycle conduit valve V1 or at some other suitable location of the recycle conduit 2d). This sensor S of the recycle conduit 2d can be communicatively connected to a controller 10 (CTRL). The controller 10 can be configured to receive data from the sensor S of the recycle conduit 2d concerning the water flow rate or water feed velocity generated by the sensor.

The electrolyzer house bypass conduit 2bp can be positioned between the polisher 5 and the water demineralization unit 3 so the purified water output from the polisher 5 that is fed to the electrolyzer house bypass conduit 2bp can be recycled back to the water demineralization unit 3. The electrolyzer house bypass conduit 2bp and the recycle conduit 2d can be connected to at least one water demineralization unit recycle conduit 2e for passing the purified water back to the water demineralization unit 3. Each water demineralization unit recycle conduit 2e can be connected between the water demineralization unit 3 and the electrolyzer house bypass conduit 2bp and/or the recycle conduit 2d to facilitate the flow of purified water being recycled back to the water demineralization unit 3.

The apparatus 1 to control the providing of purified water for hydrogen production can include a purified water control system 11. The purified water control system 11 can include the sensors S, the controller 10, the valves V and related conduits and process units (*e.g.,* polisher 5, electrolyzer house bypass conduit 2bp, *etc.*) or can be considered to only include the sensors S and the controller 10. The water purification control system 11 can be configured to determine a demand for purified water at the electrolyzers E and adjust a proportion of the purified feed of water output from the polisher 5 that is included in the first portion of the purified feed of water that is feedable to the electrolyzers E and adjust a proportion of the purified feed of water output from the polisher 5 that is included in the second portion of the purified feed of water to bypass the electrolyzers E and be recycled to the water demineralization unit 3 so that a flow of water passed through the polisher 5 is at or above a pre-selected minimum flow and the flow of water passed through the polisher is at or below a pre-selected maximum flow. The determination on demand for electrolyzer water can also be based on other factors. For example, the electrolyzer demand can also be determined based on piping size changes within a header of the electrolyzer house feed conduit 2c in situations where the header of the electrolyzer house feed conduit 2c can be incrementally reduced in size in order to keep an entire length of this conduit within the pre-selected minimum and pre-selected maximum water velocity criteria as flow in the common section of the header can be reduced as electrolyzer feed conduits of the electrolyzer house feed conduit 2c can branch off from the header for feeding different electrolyzers of the electrolyzer house 7. The pre-selected minimum flow can be any suitable flow (*e.g.,* a flow of water at which the velocity of water is 0.6 m/s) and the pre-selected maximum flow can be any suitable flow (*e.g.,* a flow of water at which the velocity of water is 3.5 m/s or 4 m/s) that can meet a pre-selected set of design criteria and also help prevent polisher bed degradation.

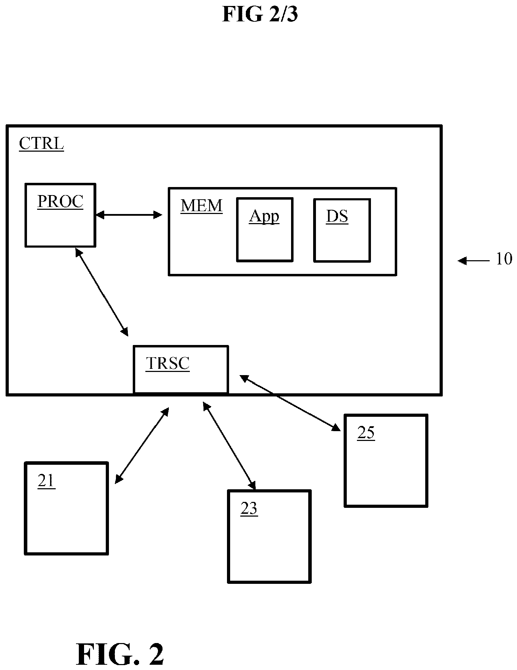

Figure 2 illustrates an exemplary embodiment of the controller 10. The controller (CTRL) can include hardware. The hardware of the controller can include a processor (PROC) that is communicatively connected to a non-transitory memory (MEM) and a transceiver (TRSC) that includes at least one receiver and at least one transmitter for communicative connections with the sensors S and valves V. At least one application (App) and/or data store (DS) can be stored on the memory (*e.g.,* flash memory, hard drive, solid state drive, or other type of non-transitory memory). Code of the application (App) can be run by the processor to define a process for providing purified water for hydrogen production that the controller 10 can oversee and/or implement *via* communications with the sensors S, valves V and/or other process elements of the apparatus 1. Embodiment of the process for providing purified water for hydrogen production can be or include a purified water control scheme defined by the code of the application run by the processor of the controller 10. The code may be defined so that the processor of the controller calls on one or more data stores that are stored on memory of the controller 10 and/or on memory that is communicatively connected to the controller (*e.g.,* remote database, *etc.*) when the application is executed by the processor running the application.

The controller 10 can be communicatively connected to at least one input device 21, at least one output device 23 and/or at least one input/output device 25. Examples of an input device can include, for example, sensors S or devices that can communicatively connect to the controller 10 so a user can provide input to the controller 10 (*e.g.,* a keypad, a microphone, a pointer device, a laptop computer, a tablet, a smart phone, *etc.*)*.* Examples of an input/output device 25 can include devices that may provide data to the controller and also output data received from the controller such as, for example, a printer, a touch screen display, a laptop computer, a smartphone, or other type of input/output device. The at least one output device 23 can include at least one speaker, a display, a printer, or other type of output device. In some embodiments, the controller 10 can be a component of an automated process control system or a distributed control system (DCS) of the apparatus 1.

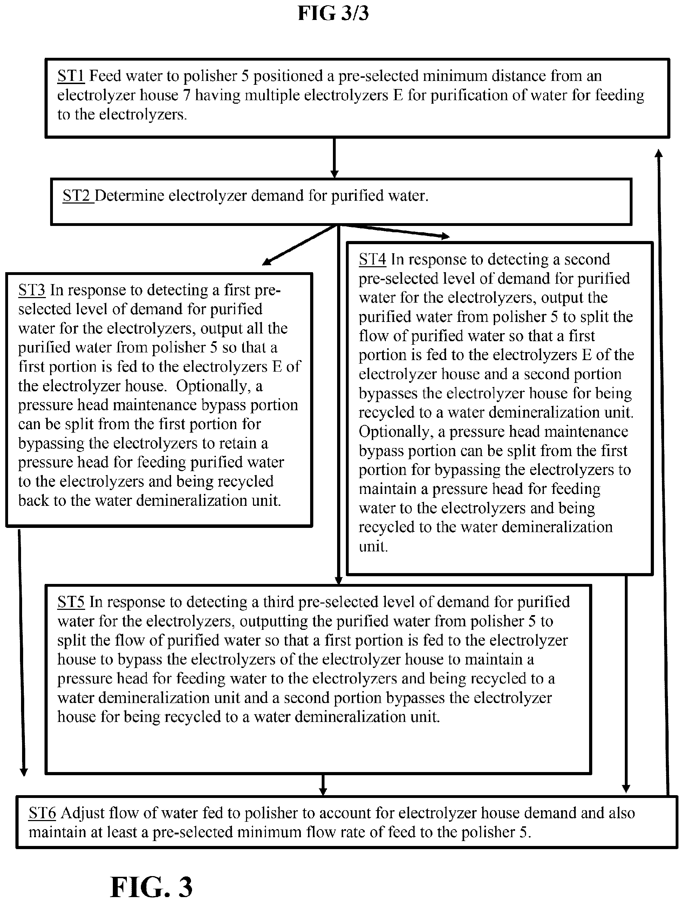

An exemplary embodiment of operation of the apparatus 1 that can be monitored and/or controlled by the controller 10 of the purified water control system 11 can be appreciated from the exemplary embodiment of the process for providing purified water illustrated in Figure 3. Embodiments of the apparatus 1 and embodiments of the purified water control system 11 can be configured to perform the exemplary process shown in Figure 3, for example.

In a first step ST1, water from the demineralization unit 3 can be fed to the polisher 5, which can be positioned a pre-selected minimum distance from the electrolyzer house 7 as discussed above. In a second step ST2, electrolyzer demand for water for the electrolyzer(s) E of the electrolyzer house 7 can be determined. The determination of electrolyzer water demand that can be used to select one of various different purified water flow control options. This determination of demand can be based on data concerning (i) loading feedback from the electrolyzers E, (ii) a flow rate or velocity of purified water detected by the sensor SS of the electrolyzer house bypass conduit 2bp (*e.g.,* sensor detecting flow passing through valve V of the electrolyzer house bypass conduit 2bp or other location of that conduit), (iii) a flow rate or velocity of purified water being fed to the polisher 5 detected by the polisher feed sensor S1, (iv) a flow rate or velocity of purified water being passed through recycle conduit 2d (*e.g.,* the valve V of the recycle conduit 2d or other selected location) detected by the recycle conduit sensor S4, and (v) a flow rate or velocity of purified water being passed through the electrolyzer house feed conduit 2c for feeding to the electrolyzers E detected by the electrolyzer house feed conduit sensor S2. The loading feedback from the electrolyzers E can be provided *via* one or more sensors, detectors, or other elements of the electrolyzers E and/or electrolyzer house 7. This data can be communicated to the controller 10 *via* one or more communicative connections the controller 10 can have with such elements. The data can include detected velocity data, flow rate data, or other data that can correspond to a water velocity or water flow rate.

For example, if a first pre-selected level of demand for water for the electrolyzers E is detected, a first portion of the purified water output from the polisher 5 (*e.g.,* purified water stream 2b) can be fed to the electrolyzer house feed conduit 2c for being fed to the electrolyzers E of the electrolyzer house 7 in a third step ST3 of the process. This first portion can be an entirety of the purified water output from the polisher 5 when the first pre-selected level of demand for water is detected.

The first pre-selected level of demand for water can be considered a high demand for water. Such a condition can occur, for example, when the electrolyzers E are operating at full capacity and available power for powering operation of the electrolyzers E is fully available. In response to detection of the first-preselected level of demand for water, the valve V of the electrolyzer house bypass conduit 2bp can be fully closed so that no purified water passes through that valve. During this third step ST3, a pressure head maintenance bypass portion may not be split from the water fed to the electrolyzers so that all the water is fed to the electrolyzers. However, it is contemplated that during this third step ST3, a pressure head maintenance bypass portion of the purified water can optionally be split from the first portion for bypassing the electrolyzers E to maintain a pressure head for feeding water to the electrolyzers and being recycled back to the water demineralization unit *via* the recycle conduit 2d and valve V of the recycle conduit 2d. This type of optional use of the pressure head maintenance bypass portion can occur for an entirety of the duration of the time that the first pre-selected level of demand for water is detected or for only a sub-part of that time period (or not be utilized at all as noted above).

As another example, if a second pre-selected level of demand for water for the electrolyzers E is detected, the purified water stream 2b can be split into a first portion and a second portion so that a first portion of the purified water output from the polisher 5 (*e.g.,* purified water stream 2b) can be fed to the electrolyzer house feed conduit 2c for being fed to the electrolyzers E of the electrolyzer house 7 in a fourth step ST4 of the process. The second portion of the purified water can be fed to the electrolyzer house bypass conduit 2bp to bypass the electrolyzer house for being recycled to the water demineralization unit 3. During this fourth step ST4, a pressure head maintenance bypass portion of the purified water can optionally be split from the first portion of the purified water for bypassing the electrolyzers E to maintain a pressure head for feeding water to the electrolyzers and being recycled back to the water demineralization unit *via* the recycle conduit 2d and valve V of the recycle conduit 2d. This can occur for an entirety of the duration of the time that the second pre-selected level of demand for water is detected or for only a sub-part of that time period.

The second pre-selected level of demand for water can be considered an intermediate demand for water. Such a condition can occur, for example, when the electrolyzers E are operating at non-full capacity and available power for powering operation of the electrolyzers E may only be intermittently available. Such an intermediate demand condition can also be detected for other operational conditions. The second pre-selected level of demand can be between a high demand as defined by the first preselected level of demand and a low level of demand that can be defined as a third pre-selected level of demand.

As another example, if a third pre-selected level of demand for water for the electrolyzers E is detected, the purified water stream 2b can be split into a first portion and a second portion so that a first portion of the purified water output from the polisher 5 (*e.g.,* purified water stream 2b) can be fed to the electrolyzer house feed conduit 2c for bypassing the electrolyzers E of the electrolyzer house 7 to maintain a pressure head for feeding water to the electrolyzers and being recycled to the water demineralization unit 3 *via* the recycle conduit 2d and valve of the recycle conduit 2d in a fifth step ST5 of the process. The second portion of the purified water can be fed to the electrolyzer house bypass conduit 2bp to bypass the electrolyzer house 7 for being recycled to the water demineralization unit 3 as well during the fifth step ST5.

In a sixth step ST6, the flow of water fed from the water demineralization unit 3 to the polisher 5 can be adjusted to account for electrolyzer house demand and also maintain at least a pre-selected minimum flow rate of water or pre-selected minimum velocity of water passed through the polisher 5. Such a pre-selected minimum flow rate or velocity can be determined to avoid polisher bed degradation. In some embodiments, the pre-selected minimum flow rate or velocity of water to be passed through the polisher 6 can be 0.6 m/s. The adjustment in the flow of water being fed to the polisher 5 can be adjusted to also avoid a pre-selected maximum flow rate or velocity of water. Such a pre-selected maximum flow rate or velocity of water can be between 4 m/s and 3.5 m/s (*e.g.,* in a range from 4 m/s to 3.5 m/s) or can be otherwise selected to avoid a flow rate of water passing through the polisher 5 exceeding a rate that would be detrimental to the apparatus and/or the operational flow design of the apparatus.

The controller 10 can oversee performance of an embodiment of the process based on the sensor data and other data as noted above. Also, the adjustment in flow of water made in step ST6 can result in the process returning to step ST1 as the feeding of water to the polisher can change and the changed feeding of the water can re-start the operational cycle of the method. The method may then proceed back to the first and second steps and one of the third step, fourth step, or fifth steps as may be needed to account for the determined demand of purified water and a subsequent adjustment of the flow of water that may subsequently occur or occur at the same time the third, fourth or fifth steps are performed.

It should be appreciated that the above noted third step ST3, fourth step ST4 or fifth step ST5 may be performed in conjunction with the sixth step ST6 based on the determination made in the second step ST2. Also, the exemplary embodiment of the process shown in Figure 3 can be performed in a continuous or semi-continuous type state (*e.g.,* continuously at pre-defined time intervals) in some embodiments.

Below is an exemplary description that further illustrates a non-limiting example of how the process control scheme monitored and/or performed by the controller 10 can be employed over the course of multiple cycles of operation of the defined processing scheme to account for different demands of purified water for the electrolyzers E that may be detected over a period of time of operation.

For example, an initial demand for water can be determined in step ST2 as being a first pre-selected level and a suitable routing of purified water of the third step ST3 can be made as well as a suitable adjustment to the flow of water in step ST6 that can result in a feed of water fed to the polisher 5 being adjusted in step ST1. The controller 10 can subsequently determine that the electrolyzer demand for water has changed from a first pre-selected level to a second pre-selected level in step ST2 and subsequently step ST4 can be performed instead of step ST3 so that the routing of purified water is adjusted from being entirely fed toward the electrolyzer house to being partially fed to the electrolyzer house 7 with a bypass portion being split to the electrolyzer house bypass conduit 2bp for bypassing the electrolyzer house and being recycled to the water demineralization unit 3. The extent of bypassing (*e.g.,* the proportion of the second portion of the stream of purified water 2b being routed to bypass the electrolyzer house for recycling to the water demineralization unit 3) can be based on the particular level of demand that is detected as being an intermediate level of demand. The flow of water being fed to the polisher 5 can also be adjusted as noted in step ST6 to account for this change in demand as well.

Thereafter, the flow of water fed to the polisher 5 can occur at the adjusted flow rate and the controller 10 can subsequently determine that the electrolyzer demand for water has changed yet again from the second pre-selected level to a third pre-selected level in step ST2 and subsequently step ST5 can be performed instead of step ST4 such that the routing of purified water is adjusted so the water is being entirely recycled back to the water demineralization unit 3. The flow of water being fed to the polisher 5 can also be adjusted as noted in step ST6 to account for this change in demand as well.

Thereafter, the flow of water fed to the polisher 5 can occur at the adjusted flow rate and the controller 10 can subsequently determine that the electrolyzer demand for water has changed yet again from the third pre-selected level to the second pre-selected level in step ST2 and subsequently step ST4 can be performed instead of step ST5 such that the routing of purified water is adjusted from being entirely recycled back to the water demineralization unit 3. The flow of water being fed to the polisher 5 can also be adjusted as noted in step ST6 to account for this change in demand as well.

Thereafter, the flow of water fed to the polisher 5 can occur at the adjusted flow rate and the controller 10 can subsequently determine that the electrolyzer demand for water has changed yet again from the second pre-selected level to a third pre-selected level in step ST2 and subsequently step ST5 can be performed instead of step ST4 such that the routing of purified water is adjusted so the water is being entirely recycled back to the water demineralization unit 3. The flow of water being fed to the polisher 5 can also be adjusted as noted in step ST6 to account for this change in demand as well.

Thereafter, the flow of water fed to the polisher 5 can occur at the adjusted flow rate and the controller 10 can subsequently determine that the electrolyzer demand for water has changed yet again from the third pre-selected level to the first pre-selected level in step ST2 and subsequently step ST3 can be performed instead of step ST5 such that the routing of purified water is adjusted so the water is being entirely fed toward the electrolyzer house 7 *via* the electrolyzer house feed conduit 2c. The flow of water being fed to the polisher 5 can also be adjusted as noted in step ST6 to account for this change in demand as well.

As noted above, the cycles of this process can be repeated numerous other times as well and vary between the different routing of purified water options of steps ST3, ST4 and ST5 to account for changes in the determined electrolyzer demand for water.

It should also be appreciated that there can be steps in addition to steps ST3, ST4 and ST5 to account for additional pre-selected levels of demand for electrolyzer water. For example, there can be multiple different intermediate demand conditions (*e.g*., multiple different per-selected discrete levels of intermediate demand or a large number of different pre-selected levels to account for various levels of demand for electrolyzer water that can be presented between a lowest demand for water condition of the third pre-selected level of demand and a highest level of demand for water condition of the first pre-selected level of demand. The different intermediate pre-defined levels of demand can be defined so that a proportion of the purified feed of water output from the polisher 5 that is included in the first portion of the purified feed of water that is feedable to the electrolyzers E can be adjusted as well as a proportion of the purified feed of water output from the polisher 5 that is included in the second portion of the purified feed of water to bypass the electrolyzers E and be recycled to the water demineralization unit 3 can be adjusted so that a flow of water passed through the polisher 5 is at or above a pre-selected minimum flow and the flow of water passed through the polisher 5 is at or below a pre-selected maximum flow while also providing sufficient purified water to the electrolyzers E to meet the demand the electrolyzers have for purified water for formation of hydrogen *via* electrolysis.

The process can also include additional steps. For example, the process can include retrofitting an embodiment of the apparatus 1 or an embodiment of the water purification control system 11. The process can also include using the water fed to the electrolyzers E to form hydrogen *via* electrolysis by use of renewable energy to help power or entirely power operation of the electrolyzers E.

Embodiments of the apparatus 1 can be configured so that the water demineralization unit 3 is a centralized unit that supplies water to a number of different electrolyzer house assemblies 12. For example, a second electrolyzer house assembly 12 can be fed water from the water demineralization unit 3 *via* a second electrolyzer house feed conduit 4a and receive a recycled portion of such water from the second electrolyzer house assembly 12 *via* a recycle conduit 4b as shown in broken line in Figure 1. In such a configuration, there can be at least one second water purification control system 11 for the second electrolyzer house assembly 12 that can also be configured to utilize an embodiment of the process for providing purified water (*e.g.,* the exemplary embodiment of the process shown in Figure 3).

Embodiments of our apparatus, system, and process can provide significant improvements in operational flexibility, significantly improved profitability by reducing capital costs for providing purified water for use in hydrogen production, and also provide maintenance and safety benefits associated with implementation and operation. For example, embodiments can operate without a continual recycle of purified water, which can reduce pumping and processing requirements on a demineralization unit and can also permit a demineralization unit to have a smaller size. Process control for the embodiments can also provide operational improvements by permitting flow adjustments based on more accurate calculations that can account for electrolyzer demand flow changing significantly at the electrolyzers (*e.g.,* wide operational adjustments of between operating at 0% capacity to 100% capacity, *etc.*)*.* Further, embodiments can be adapted to improve the environmental impact that hydrogen production processes may have by maintaining a minimum flow of fluid passing through one or more polishers to avoid polisher bed agglomeration that can inhibit purification processing or require other maintenance and/or channeling that can be formed in the bed of material that can inhibit purification processing or require other maintenance.

It should be appreciated that modifications to the embodiments explicitly shown and discussed herein can be made to meet a particular set of design objectives or a particular set of design criteria. For instance, the arrangement of valves, piping, and other conduit elements (*e.g.,* conduit connection mechanisms, tubing, seals, *etc.*) for interconnecting different units of the plant for fluid communication of the flows of fluid between different elements (*e.g.,* pumps, conduits, valves, *etc.*) can be arranged to meet a particular plant layout design that accounts for available area of the plant, sized equipment of the plant, and other design considerations. As another example, the flow rate, pressure, and temperature of the fluid passed through the various apparatus or system elements can vary to account for different design configurations and other design criteria.

Embodiments of a plant, the apparatus to control providing purified water for hydrogen production, process for controlling the providing of purified water for hydrogen production, and/or system for controlling the providing of purified water for hydrogen production can each be configured to include process control elements positioned and configured to monitor and control operations (*e.g*., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, *etc.*)*.*

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system and methods of making and using the same have been shown and described above, it is to be distinctly understood that the invention is not limited thereto but may be otherwise variously embodied and practiced within the scope of the following claims.

## Claims

1. An apparatus to control providing of purified water for hydrogen production comprising:
a polisher positioned to purify a feed of water from a water demineralization unit for outputting a purified feed of water having a pre-selected level of purity for feeding to electrolyzers of an electrolyzer house for generation of hydrogen *via* electrolysis;
the polisher positioned and arranged such that a first portion of the purified feed of water outputtable from the polisher is feedable to the electrolyzers and a second portion of the purified feed of water is outputtable to an electrolyzer house bypass conduit to bypass the electrolyzer house conduit and feed the second portion of the purified water to the water demineralization unit; and
a water purification control system configured to determine a demand for purified water at the electrolyzers and adjust a proportion of the purified feed of water output from the polisher that is included in the first portion of the purified feed of water and adjust a proportion of the purified feed of water output from the polisher that is included in the second portion of the purified feed of water so that a flow of water passed through the polisher is at or above a pre-selected minimum flow and the flow of water passed through the polisher is at or below a pre-selected maximum flow while also feeding sufficient purified water to the electrolyzers to meet the determined demand for the purified water.

2. An apparatus according to Claim 1, comprising:
an electrolyzer house feed conduit connected between the electrolyzers and the polisher to receive the first portion of the purified feed of water; and
an electrolyzer house bypass conduit connected between the water demineralization unit and the polisher to receive the second portion of the purified feed of water to bypass the electrolyzer house conduit and feed the second portion to the water demineralization unit,
wherein an adjustable valve is optionally connected to the electrolyzer house bypass conduit.

3. An apparatus according to Claim 2, comprising:
a recycle conduit connected to the electrolyzer house feed conduit so that a pressure head maintenance bypass portion of the first portion of the purified feed is passable to the water demineralization unit after bypassing the electrolyzers to maintain a pressure head for the electrolyzers,
wherein an adjustable valve is optionally connected to the recycle conduit.

4. An apparatus according to Claim 3 wherein an adjustable valve is connected to the recycle conduit, said apparatus further comprising: at least one adjustable valve connected to the electrolyzer house bypass conduit and/or at least one adjustable valve connected to the electrolyzer house feed conduit.

5. An apparatus according to Claim 4, wherein the water purification control system includes:
a controller;
an electrolyzer house feed conduit sensor positioned to detect a flow rate or velocity of purified water fed to the electrolyzer house that is communicatively connectable to the controller;
an electrolyzer house bypass conduit sensor positioned to detect a flow rate or velocity of purified water passed through the electrolyzer house bypass conduit; and
a polisher feed conduit sensor positioned to detect a flow rate or velocity of water fed to the polisher for purification.

6. An apparatus according to any of the preceding claims, wherein the polisher is positioned such that piping for feeding the water from the water demineralization unit to the electrolyzer house is arranged so that there is a ratio of between 4:1 and 3:2 of a piping distance between the polisher and the water demineralization unit as compared to a piping distance between the polisher and the electrolyzer house.

7. A process to control providing of purified water for hydrogen production, the process comprising:
feeding water to a polisher for purification of the water to form purified water for feeding to electrolyzers of an electrolyzer house for formation of hydrogen from the purified water *via* electrolysis;
determining electrolyzer demand for the purified water so that:
in response to detection of a first pre-selected level of electrolyzer demand for the purified water, feeding an entirety of the purified water output from the polisher to the electrolyzer house for feeding to the electrolyzers;
in response to detection of a second pre-selected level of electrolyzer demand for the purified water, feeding a first portion of the purified water output from the polisher to the electrolyzer house for feeding to the electrolyzers and feeding a second portion of the purified water output from the polisher to an electrolyzer house bypass conduit to feed the purified water to a water demineralization unit; and
in response to detection of a third pre-selected level of electrolyzer demand for the purified water, passing the purified water output from the polisher to the water demineralization unit such that the purified water bypasses the electrolyzers.

8. A process according to Claim 7, wherein the passing of the purified water output from the polisher to the water demineralization unit such that the purified water bypasses the electrolyzers comprises:
passing a first portion of the purified water output from the polisher to an electrolyzer house feed conduit for maintaining a pressure head for feeding water to the electrolyzers and being recycled back to the water demineralization unit; and
passing a second portion of the purified water output from the polisher to an electrolyzer house bypass conduit to feed the second portion of the purified water to the water demineralization unit.

9. A process according to Claim 7 or Claim 8, comprising:
forming hydrogen from the purified water fed to the electrolyzers *via* electrolysis.

10. A process according to any of Claims 7 to 9, wherein the determining of the electrolyzer demand for the purified water is based on one or more, optionally all, of: (i) loading feedback from the electrolyzers, (ii) a flow rate or velocity of purified water detected by a sensor of the electrolyzer house bypass conduit, (iii) a flow rate or velocity of water being fed to the polisher detected by a polisher feed sensor, (iv) a flow rate or velocity of water being passed through a recycle conduit detected by a recycle conduit sensor, and (v) a flow rate or velocity of water being passed through an electrolyzer house feed conduit for feeding to the electrolyzers detected by an electrolyzer house feed conduit sensor.

11. A process according to any of Claims 7 to 10, comprising:
adjusting a flow of water being fed to the polisher in response to the determined electrolyzer demand for the purified water.

12. A process according to any of Claims 7 to 11, wherein the passing of the purified water output from the polisher to the water demineralization unit such that the purified water bypasses the electrolyzers comprises:
passing a portion of the purified water output from the polisher to an electrolyzer house bypass conduit to feed the portion of the purified water to the water demineralization unit.

13. A water purification control system comprising:
a controller having a processor connected to a non-transitory computer readable medium, the controller configured to determine a demand for purified water at electrolyzers of an electrolyzer house and adjust a proportion of purified water output from a polisher that is included in a first portion of the purified water fed to the electrolyzers and adjust a proportion of the purified water output from the polisher that is included in a second portion of the purified water to bypass the electrolyzers so that a flow of water passed through the polisher to purify the water is at or above a pre-selected minimum flow and the flow of water passed through the polisher is at or below a pre-selected maximum flow.

14. A water purification control system according to Claim 13, comprising:
a plurality of sensors communicatively connected to the controller, the sensors including:
(i) an electrolyzer house bypass conduit sensor positioned to detect a flow rate or velocity of purified water passed through an electrolyzer house bypass conduit;
(ii) a polisher feed sensor positioned to detect a flow rate or velocity of water being fed to the polisher;
(iii) a recycle conduit sensor positioned to detect a flow rate or velocity of water being passed through a recycle conduit; and/or
(iv) an electrolyzer house feed conduit sensor positioned to detect a flow rate or velocity of water being passed through an electrolyzer house feed conduit for feeding to the electrolyzers.

15. A water purification control system according to Claim 13 or Claim 14, comprising:
a plurality of sensors communicatively connected to the controller, the sensors including:
(i) an electrolyzer house bypass conduit sensor positioned to detect a flow rate or velocity of purified water passed through an electrolyzer house bypass conduit;
(ii) a polisher feed sensor positioned to detect a flow rate or velocity of water being fed to the polisher;
(iii) a recycle conduit sensor positioned to detect a flow rate or velocity of water being passed through a recycle conduit; and
(iv) an electrolyzer house feed conduit sensor positioned to detect a flow rate or velocity of water being passed through an electrolyzer house feed conduit for feeding to the electrolyzers.
